# EUROPEAN PATENT SPECIFICATION

(11) **EP 3 139 527 B1**
(45) Date of publication and mention of the grant of the patent: **15.08.2018**
(21) Application number: 14891497.1
(22) Date of filing: 08.05.2014
(51) Int. Cl.: H04L 29/14, H04L 12/70, H04L 12/24, H04L 12/703, H04L 1/22

(54) **PROTECTION SWITCHING METHOD, NODE AND CONTROL DEVICE**
SCHUTZSCHALTUNGSVERFAHREN, KNOTEN UND STEUERUNGSVORRICHTUNG
PROCÉDÉ DE COMMUTATION DE PROTECTION, NOEUD ET DISPOSITIF DE COMMANDE

(43) Date of publication of application: 08.03.2017
(73) Proprietor: Huawei Technologies Co., Ltd., Longgang District Shenzhen, Guangdong 518129 (CN)
(72) Inventor: ZHENG, Yu, Shenzhen Guangdong 518129 (CN)
(74) Representative: Gill Jennings & Every LLP
(86) International application number: PCT/CN2014/077007
(87) International publication number: WO 2015/168892

(56) References cited:
- CN-A- 101 141 364
- CN-A- 101 662 329
- CN-A- 101 877 646
- CN-A- 101 998 186
- CN-A- 102 857 316
- US-A1- 2013 083 652
- TAKACS F FONDELLI B TREMBLAY ERICSSON Z ALI CISCO SYSTEMS A: "RSVP-TE Recovery Extension for data plane initiated reversion, and protection timer signaling; draft-takacs-ccamp-revertive-ps-10.txt", RSVP-TE RECOVERY EXTENSION FOR DATA PLANE INITIATED REVERSION, AND PROTECTION TIMER SIGNALING; DRAFT-TAKACS-CCAMP-REVERTIVE-PS-10.TXT, INTERNET ENGINEERING TASK FORCE, IETF; STANDARDWORKINGDRAFT, INTERNET SOCIETY (ISOC) 4, RUE DES FALAISES CH- 1205 G, 14 February 2014 (2014-02-14), pages 1-13, XP015097170, [retrieved on 2014-02-14]
- NN: "ITU-T G.808.1 (02/2010) - Generic protection switching - Linear trail and subnetwork protection", , 22 February 2010 (2010-02-22), pages 1-59, XP055197221, Geneva, CH Retrieved from the Internet: URL:www.itu.org [retrieved on 2015-06-22]
- LIJUN ZHANG ET AL: "An Ethernet over SONET/SDH mapping chip and its path protection switching Implementation", WIRELESS COMMUNICATIONS, NETWORKING AND INFORMATION SECURITY (WCNIS), 2010 IEEE INTERNATIONAL CONFERENCE ON, IEEE, PISCATAWAY, NJ, USA, 25 June 2010 (2010-06-25), pages 120-123, XP031727402, ISBN: 978-1-4244-5850-9

## Description

### TECHNICAL FIELD

Embodiments of the present invention relate to the communications field, and more specifically, to a protection switching method, a node, and a control device.

### BACKGROUND

Subnetwork connection protection (Subnetwork Connection Protection, SNCP for short) is protection at a channel level. A most distinctive characteristic of this protection mechanism is applicability to various network topologies, such as a mesh topology, a chain topology, a ring topology, or any hybrid topology. During network application, the SNCP may be used to protect a complete end-to-end channel, or may be used to protect only a part of a channel. For example, in an automatically switched optical network (Automatically Switched Optical Network, ASON for short), when a 1+1 service is created, an SNCP protection group is established to implement dual feed and selective receiving of the service. When a 1:1 service is created, an SNCP protection group is established to implement selective feed and selective receiving of the service.
In an actual network, for example, in the ASON, if a fiber cut occurs, the fiber cut may result in that a working path and a protection path of an SNCP protection group are faulty "at the same time"; or if a fiber cut is repaired, faults on a working path and a protection path of an SNCP protection group disappear "at the same time". In a scenario in which the working path and the protection path of the SNCP protection group are faulty "at the same time", the faults on the working path and the protection path are detected at different time due to various impact factors. The impact factors include different optical fiber lengths of the working path and the protection path, different cards on which the working path and the protection path are located, different busy degrees of CPUs of the working path and the protection path, or the like. For example, when an SNCP protection group works on a working path, it is first detected that the working path is faulty and protection switching may be triggered. After switching, the SNCP protection group works on a protection path, but it is immediately detected that the protection path is faulty, resulting in an invalid protection switching.
In a scenario in which the faults on the working path and the protection path of the SNCP protection group disappear "at the same time", similarly, disappearance of the faults on the working path and the protection path is detected at different time due to various impact factors. For example, when the SNCP protection group works on the working path, it is first detected that the fault on the protection path disappears and protection switching is triggered. The SNCP protection group changes to work on the protection path, but after switching, it is immediately detected that the fault on the working path also disappears, resulting in an invalid protection switching.
The invalid protection switching in the foregoing two scenarios results in that a service is selectively received on a non-original selective receiving path, there is an increase in reporting of a switching event or a switching alarm caused by the protection switching, and the frequent invalid reporting of the switching events and the switching alarms affects network maintenance efficiency.
At present, there is no related technical solution to resolve the foregoing invalid protection switching problem.
TAKACS F FONDELLI B TREMBLAY ERICSSON Z All CISCO SYSTEMS A: "RSVPTE Recovery Extension for data plane initiated reversion, and protection timer signaling; draft -takacs-ccamp-revertive-ps-1 0. txt", RSVP-TE RECOVERY EXTENSION FOR DATA PLANE INITIATED REVERSION, AND PROTECTION TIMER SIGNALING; DRAFT-TAKACS-CCAMP-REVERTIVEPS- 10.TXT, INTERNET ENGINEERING TASK FORCE, IETF; STANDARDWORKINGDRAFT, INTERNET SOCIETY (ISOC) 4, RUE DES FALAISES CH- 1205 G, 14 February 2014 (2014-02-14), pages 1-13, relates to protection switching mechanism.

G 808: "ITU-T G.808.1 (02/2010)- Generic protection switching- Linear trail and subnetwork protection" , 22 February 2010 (2010-02-22), relates to generic protection switching.

LIJUN ZHANG ET AL: "An Ethernet over SONET/SDH mapping chip and its path protection switching Implementation", WIRELESS COMMUNICATIONS, NETWORKING AND INFORMATION SECURITY (WCNIS), 2010 IEEE INTERNATIONAL CONFERENCE ON, IEEE, PISCATAWAY, NJ, USA, 25 June 2010 (2010-06-25), pages 120-123, relates to Ethernet over SONET/SDH mapping chip and its protection switching implementation.

### SUMMARY

Embodiments of the present invention provide a protection switching method , a node, and a protection switching system, which may resolve an invalid protection switching problem.
In particular, the present disclosure provides protection switching methods according to claims 1 and 6, a node according to claim 8 and a protection switching system according to claim 12.
In conclusion, according to the protection switching method, the node, and the protection switching system in the embodiments of the present invention, when it is detected that a path on which the node currently works is faulty or that a path on which the node does not work recovers from a fault, a timer whose duration is a fault confirmation time is started, and when it is determined that the timer expires, it is determined whether to perform protection switching according to current statuses of the two paths, which can effectively avoid invalid protection switching, and can further improve protection switching efficiency.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 shows a schematic flowchart of a protection switching method according to an embodiment of the present invention;
FIG. 2(a) and FIG. 2(b) show schematic diagrams of a protection switching method according to an embodiment of the present invention;
FIG. 3 shows a schematic flowchart of a protection switching method according to another embodiment of the present invention;
FIG. 4 shows another schematic flowchart of a protection switching method according to another embodiment of the present invention;
FIG. 5 shows a schematic block diagram of a node according to an embodiment of the present invention;
FIG. 6 shows a schematic block diagram of a control device according to an embodiment of the present invention;
FIG. 7 shows a schematic block diagram of a node according to another embodiment of the present invention;
FIG. 8 shows a schematic block diagram of a control device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should also be understood that, in the embodiments of the present invention, a control device may also be referred to as a control layer or a control plane, for example, a control plane in an automatically switched optical network (Automatically Switched Optical Network, "ASON" for short), which is not limited in the embodiments of the present invention.

It should also be understood that, in the embodiments of the present invention, a node may also be referred to as a station. Specifically, the node in the embodiments of the present invention may be specifically a node in a synchronous digital hierarchy (Synchronous Digital Hierarchy, "SDH" for short) transport network, an optical transport network (Optical Transport Network, "OTN" for short), a Multiprotocol Label Switching (Multiprotocol Label Switching, "MPLS" for short) network, or an Ethernet, which is not limited in the embodiments of the present invention.

The automatically switched optical network ASON is a new generation of optical transport networks, and is also referred to as an intelligent optical network. The automatically switched optical network introduces a control plane to a traditional optical network, functions such as resource discovery, end-to-end service provisioning, and rerouting recovery can be implemented by means of cooperation between elements such as signaling and a routing protocol, which enhances network connection management and fault recovery capabilities. Compared with the traditional network, the automatically switched optical network has more advantages in service configuration, bandwidth utilization, and a protection manner.

In the ASON network, when a 1+1 service is created, an SNCP protection group is established to implement dual feed and selective receiving of the service. SNCP in the ASON network is automatically established or deleted by the control plane.

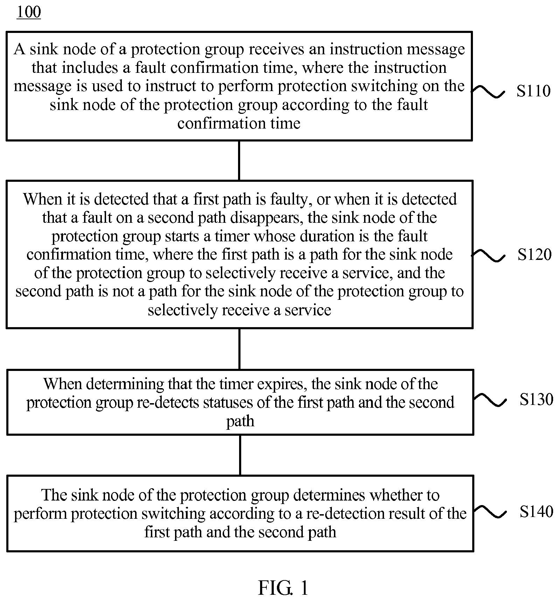

For ease of understanding and description, by way of illustration but not limitation, the following describes execution processes and actions for the protection switching method, the node and the control device in the present invention in an ASON network. FIG. 1 shows a schematic flowchart of a protection switching method 100 according to an embodiment of the present invention. For example, the method 100 may be implemented by a sink node of a protection group. As shown in FIG. 1, the method 100 includes:
S110. The sink node of the protection group receives an instruction message that includes a fault confirmation time, where the instruction message is used to instruct to perform protection switching on the sink node of the protection group according to the fault confirmation time.
S120. When it is detected that a first path is faulty, or when it is detected that a fault on a second path disappears, the sink node of the protection group starts a timer whose duration is the fault confirmation time, where the first path is a path used by the sink node of the protection group to selectively receive a service, and the second path is not a path used by the sink node of the protection group to selectively receive a service.
S130. When determining that the timer expires, the sink node of the protection group re-detects statuses of the first path and the second path.
S140. The sink node of the protection group determines whether to perform protection switching according to a re-detection result of the first path and the second path.

Specifically, the sink node of the protection group performs the protection switching according to the received instruction message that includes the fault confirmation time.

When it is detected that the first path on which the node currently works is faulty or the second path on which the node does not work recovers from a fault, the timer whose duration is the fault confirmation time is started. Specifically, the timer may be a timer for a path on which the detection is currently performed, or may be a control-protocol-based timer of the node, which is not limited in this embodiment of the present invention. When it is determined that the timer expires, the statuses of the two paths are detected. Whether to perform protection switching is determined according to the result of the detection of the first path and the second path.

Therefore, according to the protection switching method in this embodiment of the present invention, when it is detected that a path on which a node currently works is faulty or that a path on which the node does not work recovers from a fault, a timer whose duration is a fault confirmation time is started, and when it is determined that the timer expires, whether to perform protection switching is determined according to current statuses of the two paths, which can effectively avoid invalid protection switching, and can further improve protection switching efficiency.

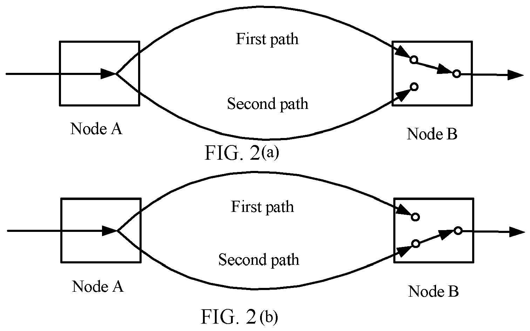

To help a person skilled in the art better understand the technical solutions provided in the embodiments of the present invention, with reference to FIG. 2, the following describes in detail the protection switching method. Specifically, as shown in FIG. 2(a), for example, a service path between a node A to a node B has two paths: a first path and a second path. It is assumed that the service path flows in a direction from the node A to the node B, as shown in FIG. 2. There are two signal sources at an ingress of the node B, and the node B selectively receives only one signal source at a same moment, that is, selects only one path to work on. As shown in FIG. 2(a), the node B currently works on the first path, and in this case, the first path may be referred to as an active path, and the second path may be referred to as a standby path.

When the first path on which the node currently works is faulty but a state of the currently standby second path is normal, the node B disconnects from the first path and connects to the second path, that is, a working path is changed from the first path to the second path, as shown in FIG. 2(b). This process may be referred to as a protection switching of the node B. As shown in FIG. 2, in the node B, a structure that includes two source ports and one sink port and that is similar to a dual selective switch may be referred to as a protection group of the node B, that is, it can be understood that the protection switching of the node B is implemented by changing the dual selective switch of the protection group.

It should also be understood that, the protection group mentioned above may be specifically a subnetwork connection protection (Subnetwork Connection Protection, "SNCP" for short) group in an ASON network, or may be a protection group of another type, which is not particularly limited in this embodiment of the present invention.

It should also be understood that, it can be learnt from the prior art that, when a service path has at least two service paths at an ingress of a node, and the two service paths are combined into one service path at an egress of the node, a protection switching mechanism may be set for the node (or a protection group used for protection switching may be configured, for example, an SNCP protection group).

Related content about configuring the protection switching mechanism for the node is the prior art, and for brevity, details are not described herein.

In S110, the instruction message that includes the fault confirmation time is received.

It should be understood that, in this embodiment of the present invention, the instruction message may be a message sent by a network manager, a control device or another node in the network to the sink node of the protection group, which is not limited in this embodiment. In addition, the instruction message may be specifically a path establishment message or the like, which is not limited in this embodiment of the present invention.

Optionally, in an embodiment, in the method 100 shown in FIG. 1, the instruction message is a path establishment message.

Specifically, the path establishment message may be a signaling message sent by the control device, for example, Resource Reservation Protocol (Resource Reservation Protocol, "RSVP" for short) signaling. Specifically, by using the SNCP protection group as an example, an object <SNCP_ DETECTION_CONFIRM> is included in a Path message of the RSVP signaling, as shown in the following:

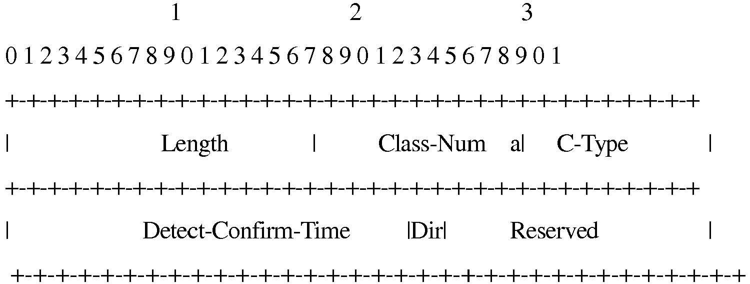

Detect-Confirm-Time is the fault confirmation time of the SNCP protection group, occupies 16 bits, and is in unit of ms. Dir is service direction indication information and occupies 2 bits, where a value 0 indicates a forward service, and a value 1 indicates a reverse service. For example, the fault confirmation time Detect-Confirm-Time of the SNCP protection group is set to 10 ms, and the service direction indication information Dir is set according to an actual service direction.

The node receives the foregoing RSVP signaling, and may learn, by parsing the Path message, that the protection switching of the sink node of the protection group is to be performed according to the fault confirmation time.

It should be understood that the instruction message may be sent to the sink node of the protection group in another manner, which is not limited in this embodiment of the present invention.

Optionally, in an embodiment, in the method 100 shown in FIG. 1, the fault confirmation time is determined according to the delay difference between the first path and the second path.

Preferably, the fault confirmation time is not more than 30 ms.

Specifically, for example, different optical fiber lengths of the first path and the second path may result in the delay difference between the two paths. It should be understood that the fault confirmation time may be alternatively determined according to busy degrees of CPUs of the two paths, which is not limited in this embodiment of the present invention.

It should be understood that, in the prior art, protection switching time is generally within 50 ms, that is, the technical solutions in the embodiments of the present invention may not only resolve the invalid protection switching problem by using the fault confirmation time, but also avoid affecting protection switching performance of the protection group by generally preventing the protection switching time of the protection group from exceeding 50 ms.

It should also be understood that the instruction message may instruct to configure the protection switching mechanism ("configure a protection group" for short) for the sink node and at the same time instruct to perform protection switching of the sink node of the protection group according to the fault confirmation time.

In S120, when it is detected that the first path on which the node currently works is faulty, or when it is detected that the fault on the second path on which the node does not currently work disappears, the timer whose duration is the fault confirmation time is started. Specifically, the timer may be a timer for a path on which the detection is currently performed.

Optionally, in an embodiment, in S120, the starting a timer whose duration is the fault confirmation time includes:
starting the timer for the first path when it is detected that the first path is faulty; or
starting the timer for the second path when it is detected that the fault on the second path disappears.

Specifically, by still using FIG. 2(a) as an example, the following describes specific solutions for starting the timer in two scenarios.

In scenario one, the timer is started when it is detected that the path on which the node currently works is faulty.

As shown in FIG. 2(a), there are two paths between the node A and the node B, and the node B currently works on the first path (or the node B performs selective receiving on the first path). That is, the node A dually feeds a service signal to the node B by using the first path and the second path, and the node B selectively receives only a service signal on the first path and transmits the service signal to a next node.

When it is detected that the first path on which the node B currently performs the selective receiving is faulty, the timer for the first path is started, and duration of the timer is the fault confirmation time.

It should be understood that the node B may find the faulty first path by detecting the first path, or may learn of the faulty first path according to a fault indication message reported for the first path, for example, a fault alert packet.

It should also be understood that, after it is detected that the path on which the node B currently works is faulty, the timer for the path on which the node B currently works may be directly started without considering a state of the path on which the node B does not currently work. According to the invention it should be understood that after the timer whose duration is the fault confirmation time is started for the first path and before the timer expires, the node B does not detect the statuses of the first path and the second path, or even if the node B receives state change indication information reported for the two paths, the node B may not perform any processing. After the timer expires, the statuses of the two paths are re-detected and confirmed to determine whether to perform protection switching.

In scenario two, the timer is started when it is detected that the fault on the path on which the node does not work disappears.

As shown in FIG. 2(a), there are two paths between the node A and the node B, and the node B currently works on the first path (or the node B performs selective receiving on the first path). That is, the node A dually feeds a service signal to the node B by using the first path and the second path, and the node B selectively receives only a service signal on the first path and transmits the service signal to a next node.

When it is detected that the state of the second path on which the node B does not currently work changes from "faulty" to "fault disappearance", the timer whose duration is the fault confirmation time is started for the second path.

It should be understood that the node B may find the fault disappearance on the second path by detecting the second path, or may learn of the fault disappearance on the second path according to a fault disappearance indication message reported for the second path, for example, a fault disappearance packet.

It should also be understood that after it is detected that the fault on the path on which the node does not currently work disappears, the timer for the path on which the node does not currently work may be directly started without considering a state of the path on which the node currently works.

It should also be understood that after the timer whose duration is the fault confirmation time is started for the second path and before the timer expires, the node B does not detect the statuses of the first path and the second path, or even if the node B receives state change indication information reported for the two paths, the node B may not perform any processing. After the timer expires, the statuses of the two paths are re-detected and confirmed to determine whether to perform protection switching.

It should be understood that the node B in FIG. 2(a) may correspond to the sink node of the protection group in this embodiment of the present invention, and the node A may correspond to another node that interconnects with the sink node.

In S120, when it is detected that when the first path on which the node currently works is faulty, or it is detected that the fault on the second path on which the node does not currently work disappears, the timer for the path on which the detection is currently performed may be started, that is, a delay operation for the protection switching is set on the path on which the detection is currently performed.

Alternatively, the delay operation may be set in a position in which the node performs the protection switching.

Optionally, in an embodiment, in S120, the starting a timer whose duration is the fault confirmation time includes:
starting the timer when it is detected that the first path is faulty but the second path is not faulty; or
starting the timer when it is detected that the fault on the second path disappears but the first path is faulty.

Specifically, FIG. 2(a) is still used as an example for description. As shown in FIG. 2(a), there are two paths between the node A and the node B, and the node B currently works on the first path (or the node B performs selective receiving on the first path).

That is, the node A dually feeds a service signal to the node B by using the first path and the second path, and the node B selectively receives only a service signal on the first path and transmits the service signal to a next node. The node B keeps detecting the statuses of the two paths or monitors in real time indication messages reported for the two paths. When it is detected that the first path on which selective receiving is currently performed is faulty but the second path on which selective receiving is not currently performed is not faulty, the timer whose duration is the fault confirmation time is started. When it is detected the fault on the second path on which selective receiving is not currently performed disappears but the first path on which selective receiving is currently performed is faulty, the timer whose duration is the fault confirmation time is started.

It should also be understood that before the timer expires, the node B may not detect the statuses of the first path and the second path, or even if the node B receives state change indication information reported for the two paths, the node B may not perform any processing. After the timer expires, the statuses of the two paths are re-detected and confirmed to determine whether to perform protection switching.

It should be understood that the node B in FIG. 2(a) may correspond to the sink node of the protection group in this embodiment of the present invention, and the node A may correspond to another node that interconnects with the sink node.

In S130, when it is determined that the timer expires, the statuses of the first path and the second path are re-detected. Specifically, for example, if the fault confirmation time is 10 ms, the statuses of the two paths are re-detected after the 10 ms expires.

In S140, when the timer expires, whether to perform protection switching is determined according to the re-detected statuses of the first path and the second path.

Specifically, when it is detected that the statuses of the two paths are the same, for example, when both the paths are faulty or both the statuses of the two paths are normal, the protection switching is not performed, that is, the node still works on the first path on which selective receiving is initially performed; or when it is detected that the state of the first path on which the node currently works is normal, the state of the first path is updated and the node continues to work on the first path without considering the state of the second path on which the node does not work.

Optionally, in an embodiment, in S140, the determining whether to perform protection switching includes:
when the re-detection result is that the first path is not faulty or that both the first path and the second path are faulty, determining not to perform protection switching.

Specifically, FIG. 2(a) is still used as an example for description. The node B initially works on the first path. When the timer expires, the statuses of the two paths are re-detected. It is found that the state of the first path is normal, the protection switching of the node B is not preformed, the state of the first path may be updated, and the node B continues to work (or perform selective receiving) on the first path.

Alternatively, when it is detected that both the paths are faulty, the protection switching of the node B is not preformed either.

Optionally, in an embodiment, in S140, the determining whether to perform protection switching includes:
when the re-detection result is that the first path is faulty but the second path is not faulty, determining to perform protection switching, so that the sink node of the protection group disconnects from the first path and selectively receives a service on the second path.

Specifically, FIG. 2(a) is still used as an example for description. As shown in FIG. 2(a), the node B initially works on the first path. When the timer expires, the statuses of the two paths are re-detected. It is found that the first path is faulty but the state of the second path is normal, and performing the protection switching is determined.

Specifically, as shown in FIG. 2(b), the node B disconnects from the first path and connects to the second path, that is, the node B works on the second path, and the protection switching of the node B is completed.

It should be understood that it is mentioned in this specification that the path is faulty or the fault on the path disappears. Specifically, for example, that the first path is faulty may refer to a service signal failure (Signal Fail, "SF" for short) on the first path, a service signal degradation (Signal Degrade, "SD" for short) on the first path, a service signal changing from SD to SF on the first path, or another signal quality deterioration case, which is not limited in this embodiment of the present invention.

Correspondingly, that the fault on the second path disappears may refer to a service signal changing from SF to SD on the second path, a service signal recovered from SF or SD on the second path, another signal changing from "invalid" to "valid", or a case in which signal quality changes from "weak" to "good", which is not limited in this embodiment of the present invention.

In the existing method for the protection switching, effectively avoiding invalid protection switching for a node is difficult. On the one hand, the invalid protection switching results in that a service is selectively received on a non-original selective receiving path. On the other hand, there is an increase in reporting of a switching event or a switching alarm caused by the protection switching, and the frequent invalid reporting of the switching events and the switching alarms affects network maintenance efficiency.

It should be understood that, with reference to the example shown in FIG. 2, the foregoing describes the technical solutions of the present invention to help a person skilled in the art to better understand the embodiments of the present invention, but not to limit the scope of the embodiments of the present invention.

In conclusion, according to the protection switching method in this embodiment of the present invention, when it is detected that a path on which a node currently works is faulty or that a fault on a path on which the node does not currently work disappears, a timer is started, and when the timer expires, whether to perform protection switching is determined by re-detecting statuses of the two paths, which can effectively avoid invalid protection switching, improve node protection switching efficiency, and reduce impact of the invalid protection switching on network maintenance.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

It should also be understood that the technical solutions of the present invention may also be applied in a non-ASON network, and the invalid protection switching can be avoided by using a "fault confirmation time" mechanism. It should also be understood that the "fault confirmation time" mechanism may also be applied in another "dual feed and selective receiving" scenario, which is not particularly limited in this embodiment of the present invention.

Therefore, according to the protection switching method in this embodiment of the present invention, when it is detected that a path on which a node currently works is faulty or that a fault on a path on which the node does not currently work disappears, a timer is started, and when the timer expires, whether to perform protection switching is determined by re-detecting statuses of the two paths, which can effectively avoid invalid protection switching, improve node protection switching efficiency, and reduce impact of the invalid protection switching on network maintenance.

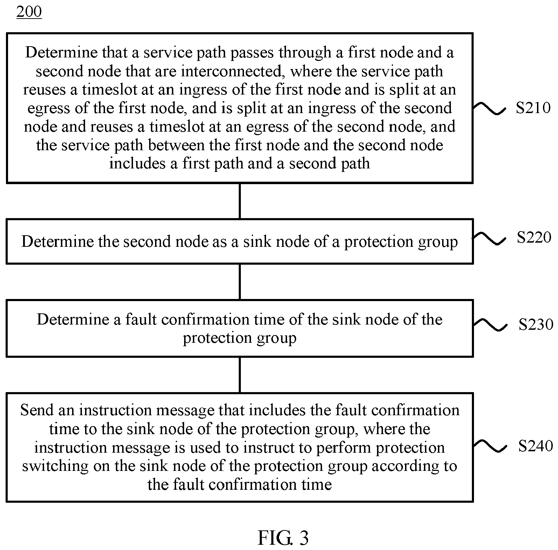

With reference to FIG. 1 and FIG. 2, the foregoing describes in detail the protection switching method according to this embodiment of the present invention from a perspective of the node. With reference to FIG. 3, the following describes a protection switching method according to an embodiment of the present invention from a perspective of a control device.

As shown in FIG. 3, a protection switching method 200 according to this embodiment of the present invention may be executed by, for example, a control device, where the method 200 includes:
S210. Determine that a service path passes through a first node and a second node that are interconnected, where the service path reuses a timeslot at an ingress of the first node and is split at an egress of the first node, and is split at an ingress of the second node and reuses a timeslot at an egress of the second node, and the service path between the first node and the second node includes a first path and a second path.
S220. Determine the second node as a sink node of a protection group.
S230. Determine a fault confirmation time of the sink node of the protection group.
S240. Send an instruction message that includes the fault confirmation time to the sink node of the protection group, where the instruction message is used to instruct to perform protection switching on the sink node of the protection group according to the fault confirmation time.

Therefore, according to the protection switching method in this embodiment of the present invention, an instruction message that includes a fault confirmation time is sent to a node, so that the node performs protection switching according to the fault confirmation time, invalid protection switching can be effectively avoided, and protection switching efficiency can be improved.

To facilitate understanding of the technical solutions of the present invention, with reference to FIG. 2(a) and FIG. 2(b), the following describes in detail a node protection switching process. For example, a service path between a node A to a node B has two paths: a first path and a second path. It is assumed that the service path flows in a direction from the node A to the node B, as shown in FIG. 2. There are two signal sources at an ingress of the node B, and the node B selectively receives only one signal source at a same moment, that is, selects only one path to work on. As shown in FIG. 2(a), the node B currently works on the first path, and in this case, the first path may be referred to as an active path, and the second path may be referred to as a standby path. When the first path on which the node currently works is faulty but a state of the currently standby second path is normal, the node B disconnects from the first path and connects to the second path, that is, a working path is changed from the first path to the second path, as shown in FIG. 2(b). This process may be referred to as a protection switching of the node B. As shown in FIG. 2, in the node B, a structure that includes two source ports and one sink port and that is similar to a dual selective switch may be referred to as a protection group of the node B, that is, it can be understood that the protection switching of the node B is implemented by changing the dual selective switch of the protection group.

It should also be understood that, the protection group mentioned above may be specifically a subnetwork connection protection (Subnetwork Connection Protection, "SNCP" for short) group in an ASON network, or may be a protection group of another type, which is not particularly limited in this embodiment of the present invention.

In S210, it is determined that the service path passes through the first node and the second node that are interconnected, where the service path reuses a timeslot at the ingress of the first node and is split at the egress of the first node, and is split at the ingress of the second node and reuses a timeslot at the egress of the second node, and the service path between the first node and the second node includes the first path and the second path; and in S220, the second node is determined as the sink node of the protection group.

Specifically, as shown in FIG. 2(a), the service path reuses a timeslot at the ingress of the node A (that is, the service path is one service path at the ingress of the node) and is split at the egress of the node A (that is, there are at least two service paths at the egress of the node), and is split at the ingress of the node B (that is, there are at least two service paths at an ingress of the node) and reuses a timeslot at the egress of the node B (that is, the service paths are combined into one service path at the egress of the node). The node B may be the sink node of the protection group in this embodiment of the present invention. It can be learnt from the prior art that, when a service path is split at an ingress of a node (that is, there are at least two service paths at the ingress of the node) and reuses a timeslot at an egress of the node (that is, the service paths are combined into one service path at the egress of the node), a protection switching mechanism may be set for the node (or a protection group used for the protection switching may be configured, for example an SNCP protection group). Related content about configuring the protection switching mechanism for the node is the prior art, and for brevity, details are not described herein.

It should be understood that the path between the first node and the second node may also pass through another node, that is, the first node and the second node may be adjacent nodes or non-adjacent nodes, which is not limited in this embodiment of the present invention, provided that the first node and the second node have connection on the service path and include two paths.

In S230, the fault confirmation time of the sink node of the protection group is determined. Specifically, the fault confirmation time may be determined according to a delay difference between the first node and the second node.

Optionally, in an embodiment, in the method 200 shown in FIG. 3, in S230, the determining a fault confirmation time of the sink node of the protection group includes:
determining the fault confirmation time according to a delay difference between the first path and the second path.

Specifically, optionally, when a distance difference between the first path and the second path is less than 1000 km, the fault confirmation time is determined as 10 ms.

When a distance difference between the first path and the second path is greater than 1000 km but less than or equal to 3000 km, the fault confirmation time is determined as 20 ms.

When a distance difference between the first path and the second path is greater than 3000 km but less than or equal to 5000 km, the fault confirmation time is determined as 30 ms.

It should be understood that the fault confirmation time may be alternatively determined according to busy degrees of CPUs of the two paths, which is not limited in this embodiment of the present invention.

Optionally, in an embodiment, in the method 200 shown in FIG. 3, the fault confirmation time is not more than 30 ms.

It should be understood that, in the prior art, protection switching time is generally within 50 ms, that is, the technical solutions in the embodiments of the present invention may not only resolve the invalid protection switching problem by using the fault confirmation time, but also avoid affecting protection switching performance of the protection group by generally preventing the protection switching time of the protection group from exceeding 50 ms.

In S240, the control device sends the instruction message that includes the fault confirmation time to the sink node of the protection group, where the instruction message is used to instruct to perform protection switching on the sink node of the protection group according to the fault confirmation time.

It should be understood that the instruction message may be specifically a path establishment message or the like, which is not limited in this embodiment of the present invention.

Optionally, in an embodiment, in the method 200 shown in FIG. 3, the instruction message is a path establishment message.

Specifically, the path establishment message may be a signaling message sent by the control device, for example, Resource Reservation Protocol (Resource Reservation Protocol, "RSVP" for short) signaling. Specifically, by using an example in which the protection group of the node is the SNCP protection group, an object <SNCP_ DETECTION_CONFIRM> is included in a Path message of the RSVP signaling, as shown in the following:

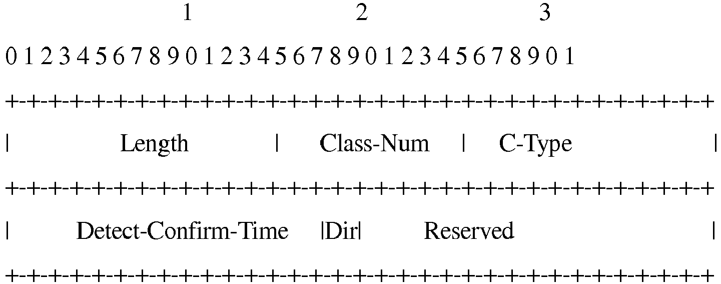

Detect-Confirm-Time is the fault confirmation time of the SNCP protection group, occupies 16 bits, and is in unit of ms. Dir is service direction indication information and occupies 2 bits, where a value 0 indicates a forward service, and a value 1 indicates a reverse service. For example, the fault confirmation time Detect-Confirm-Time of the SNCP protection group is set to 10 ms, and the service direction indication information Dir is set according to an actual service direction.

The node receives the foregoing RSVP signaling, and may learn, by parsing the Path message, that the protection switching of the sink node of the protection group is to be performed according to the fault confirmation time.

It should be understood that the control device may send the instruction message to the node in another manner, which is not limited in this embodiment of the present invention.

It should also be understood that the instruction message may instruct to configure the protection switching mechanism ("configure a protection group" for short) and at the same time instruct to perform protection switching of the sink node of the protection group according to the fault confirmation time.

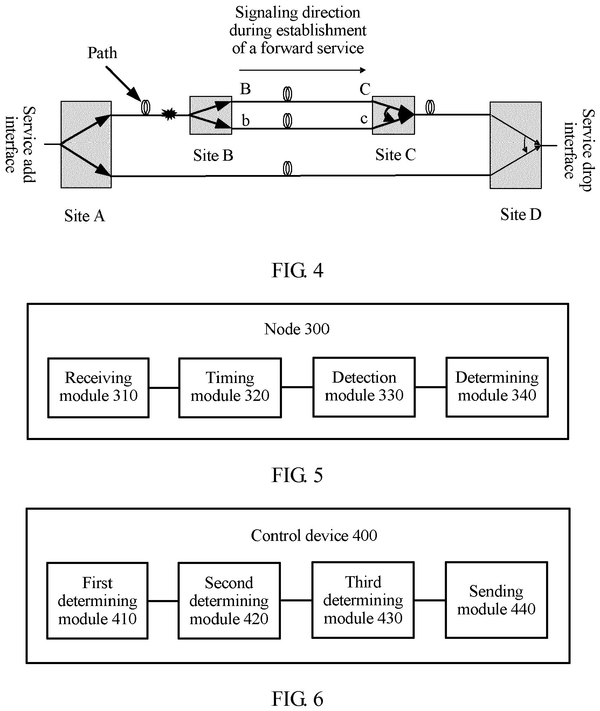

To facilitate understanding of the technical solutions of the present invention, with reference to FIG. 4, the following uses the SNCP in the ASON network as an example for detailed description. As shown in FIG. 4, the service needs to transmit from a station A to a station D over the ASON network, a current route is A-B-C-D, and a path between a station B and a station C is bc. For some reason, the service needs rerouting. For example, a signaling module of the control device requests route computation from a routing module, and after the route computation, the routing module finds that a new path for the service is A-B-C-D and that the path between the station B and the station C is BC. In this case, the service reuses a timeslot at an ingress of the new path and the old path of the node B and is split at an egress of the node B, and is split at an ingress of the downstream node C but timeslot reused at an egress of the node C. Therefore, an SNCP protection group needs to be established at the node C in a direction same as a forward service signal flow, and a "fault confirmation time" needs to be configured for the SNCP. That is because, for example, if an optical fiber between the station A and the station B is broken, the active path and the standby path (BC and bc) of the SNCP at the station C may be faulty at the same time. If the service is a bidirectional service, after the route computation, the routing module obtains, by means of calculation, that an SNCP needs to be established at the node B for a reverse service and that a "fault confirmation time" needs to be configured for the SNCP. Information that the "fault confirmation time" needs to be configured for the SNCP at the node C in the forward service direction is used as a route computation result and returned by the routing module to the signaling module.

The signaling module receives the information returned by the routing module. In a Path message of an RSVP packet of a corresponding node, an object <SNCP_ DETECTION_CONFIRM> is added in signaling, and a fault confirmation time 10 ms for the SNCP and service direction information are filled in.

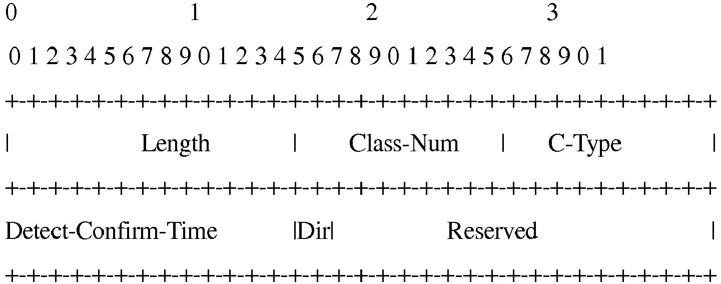

Detect-Confirm-Time is the fault confirmation time for the SNCP, occupies 16 bits, and in unit of ms. Dir is a direction indicated by the bidirectional service for this SNCP and occupies 2 bits, where a value 0 indicates a forward service, and a value of 1 indicates a reverse service.
(1) The signaling module starts to establish the service path, a path establishment process is completed by using the Path message of the RSVP triggered by the signaling module, and the object <SNCP_DETECTION_CONFIRM> added in the Path message carries the information that the fault confirmation time needs to be configured for the SNCP to a corresponding station.
(2) The Path message may be transferred along the service path, and at the station C, the signaling may extract object information <SNCP_ DETECTION_CONFIRM> from the packet, so that the station C learns that an SNCP needs to be established during establishment of a new service path and learns of the fault confirmation time that needs to be configured for this SNCP.
(3) Likewise, if the service is a bidirectional service, at the station B, the signaling may also extract object information <SNCP_ DETECTION_CONFIRM> from the Path message, so that the station B learns that an SNCP needs to be established during establishment of a new path for a reverse service and learns of the fault confirmation time that needs to be configured for this SNCP.
(4) The corresponding stations (the station C and the station B) obtain the information that the fault confirmation time needs to be configured for the to-be-established SNCP, and instruct an SNCP protocol module to create an SNCP protection group and configure the fault confirmation time in the SNCP protocol module.

It should be understood that, in the foregoing examples, a node at which the fault confirmation time needs to be configured (for the forward service: the station C; for the reverse service: the station B) corresponds to the sink node of the protection group according to this embodiment of the present invention.

It should be noted that, the foregoing examples are only intended to help a person skilled in the art better understand the embodiments of the present invention, instead of limiting the scope of the embodiments of the present invention. A person skilled in the art certainly can make various equivalent modifications or changes according to the given examples, which also fall within the scope of the embodiments of the present invention.

In the existing method for the protection switching, effectively avoiding invalid protection switching for a node is difficult. On the one hand, the invalid protection switching results in that a service is selectively received on a non-original selective receiving path. On the other hand, there is an increase in reporting of a switching event or a switching alarm caused by the protection switching, and the frequent invalid reporting of the switching events and the switching alarms affects network maintenance efficiency.

In conclusion, according to the protection switching method in this embodiment of the present invention, an instruction message that includes a fault confirmation time is sent to a node, so that the node performs protection switching according to the fault confirmation time, invalid protection switching can be effectively avoided, node protection switching efficiency can be improved, and impact of the invalid protection switching on network maintenance can be reduced.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

It should also be understood that, the sink node of the protection group in the protection switching method 200 according to this embodiment of the present invention may correspond to the node B shown in FIG. 2(a) and FIG. 2(b), or may correspond to the station C shown in FIG. 4, which is not limited in this embodiment of the present invention.

It should also be understood that the technical solutions of the present invention may also be applied in a non-ASON network, and the invalid protection switching can be avoided by using a "fault confirmation time" mechanism. It should also be understood that the "fault confirmation time" mechanism may also be applied in another "dual feed and selective receiving" scenario, which is not particularly limited in this embodiment of the present invention.

Therefore, according to the protection switching method in this embodiment of the present invention, an instruction message that includes a fault confirmation time is sent to a node, so that the node performs protection switching according to the fault confirmation time, invalid protection switching can be effectively avoided, node protection switching efficiency can be improved, and impact of the invalid protection switching on network maintenance can be reduced.

With reference to FIG. 1 to FIG. 4, the protection switching method according to the embodiments of the present invention is described above in detail, and with reference to FIG. 5 to FIG. 6, a node and a control device according to an embodiment of the present invention is described in detail in the following.

FIG. 5 shows a schematic block diagram of a node 300 according to an embodiment of the present invention. As shown in FIG. 5, the node includes:
a receiving module 310, configured to receive an instruction message that includes a fault confirmation time, where the instruction message is used to instruct to perform protection switching on the node of the protection group according to the fault confirmation time;
a timing module 320, configured to: when it is detected that a first path is faulty, or when it is detected that a fault on a second path disappears, start a timer whose duration is the fault confirmation time received by the receiving module, where the first path is a path for the node to selectively receive a service, and the second path is not a path for the node to selectively receive a service;
a detection module 330, configured to: when it is determined that the timer of the timing module expires, re-detect statuses of the first path and the second path; and
a determining module 340, configured to determine whether to perform protection switching according to a re-detection result from the detection module.

Therefore, according to the node in this embodiment of the present invention, when it is detected that a path on which the node currently works is faulty or that a path on which the node does not work recovers from a fault, a timer whose duration is a fault confirmation time is started, and when it is determined that the timer expires, whether to perform protection switching is determined according to current statuses of the two paths, which can effectively avoid invalid protection switching, and can further improve protection switching efficiency.

Optionally, in an embodiment, in the node 300 shown in FIG. 5, the timing module is specifically configured to start the timer for the first path when it is detected that the first path is faulty; or
the timing module is specifically configured to start the timer for the second path when it is detected that the fault on the second path disappears. Optionally, in an embodiment, in the node 300 shown in FIG. 5, the timing module is specifically configured to start the timer when it is detected that the first path is faulty but the second path is not faulty; or
the timing module is specifically configured to start the timer when it is detected that the fault on the second path disappears but the first path is faulty.

Optionally, in an embodiment, in the node 300 shown in FIG. 5, the determining module is specifically configured to: when the re-detection result is that the first path is not faulty or that both the first path and the second path are faulty, determine not to perform protection switching.

Optionally, in an embodiment, in the node 300 shown in FIG. 5, the determining module is specifically configured to: when the re-detection result is that the first path is faulty but the second path is not faulty, determine to perform protection switching, so that the node disconnects from the first path and selectively receives a service on the second path.

Optionally, in an embodiment, in the node 300 shown in FIG. 5, the fault confirmation time received by the receiving module is determined by the control device according to a delay difference between the first path and the second path.

Optionally, in an embodiment, in the node 300 shown in FIG. 5, the instruction message received by the receiving module is a path establishment message.

It should be understood that the node 300 according to this embodiment of the present invention may correspond to the sink node of the protection group in the protection switching method 100 or the sink node of the protection group in the protection switching method 200 according to the embodiments of the present invention, or may correspond to the node B in FIG. 2 or the station C in FIG. 4. The foregoing or other operations and/or functions of all modules on the node 300 are separately used to implement corresponding procedures of the methods shown in FIG. 1 to FIG. 4. For brevity, details are not described herein.

It should be understood that it is mentioned in this specification that the path is faulty or the fault on the path disappears. Specifically, for example, that the first path is faulty may refer to a service signal failure (Signal Fail, "SF" for short) on the first path, a service signal degradation (Signal Degrade, "SD" for short) on the first path, a service signal changing from SD to SF on the first path, or another signal quality deterioration case, which is not limited in this embodiment of the present invention.

Correspondingly, that the fault on the second path disappears may refer to a service signal changing from SF to SD on the second path, a service signal recovered from SF or SD on the second path, another signal changing from "invalid" to "valid", or a case in which signal quality changes from "weak" to "good", which is not limited in this embodiment of the present invention.

In the existing method for the protection switching, effectively avoiding invalid protection switching for a node is difficult. On the one hand, the invalid protection switching results in that a service is selectively received on a non-original selective receiving path. On the other hand, there is an increase in reporting of a switching event or a switching alarm caused by the protection switching, and the frequent invalid reporting of the switching events and the switching alarms affects network maintenance efficiency.

In conclusion, according to the node in this embodiment of the present invention, when it is detected that a path on which the node currently works is faulty or that a fault on a path on which the node does not currently work disappears, a timer is started, and when the timer expires, whether to perform protection switching is determined by re-detecting statuses of the two paths, which can effectively avoid invalid protection switching, improve node protection switching efficiency, and reduce impact of the invalid protection switching on network maintenance.

It should also be understood that the node according to this embodiment of the present invention may be applied in a non-ASON network, and the invalid protection switching can be avoided by using a "fault confirmation time" mechanism. It should also be understood that the "fault confirmation time" mechanism may also be applied in another "dual feed and selective receiving" scenario, which is not particularly limited in this embodiment of the present invention.

Therefore, according to the node in this embodiment of the present invention, when it is detected that a path on which the node currently works is faulty or that a fault on a path on which the node does not currently work disappears, a timer is started, and when the timer expires, whether to perform protection switching is determined by re-detecting statuses of the two paths, which can effectively avoid invalid protection switching, improve node protection switching efficiency, and reduce impact of the invalid protection switching on network maintenance.

The node according to this embodiment of the present invention is described above in detail with reference to FIG. 5, and a control device according to an embodiment of the present invention is described in detail in the following with reference to FIG. 6.

FIG. 6 shows a schematic block diagram of a control device 400 according to an embodiment of the present invention. As shown in FIG. 6, the control device 400 includes:
a first determining module 410, configured to determine that a service path passes through a first node and a second node that are interconnected, where the service path reuses a timeslot at an ingress of the first node and is split at an egress of the first node, and is split at an ingress of the second node and reuses a timeslot at an egress of the second node, and the service path between the first node and the second node includes a first path and a second path;
a second determining module 420, configured to determine that the second node determined by the first determining module is used as a sink node of a protection group;
a third determining module 430, configured to determine a fault confirmation time of the sink node of the protection group determined by the second determining module; and
a sending module 440, configured to send an instruction message that includes the fault confirmation time to the sink node of the protection group determined by the third determining module, where the instruction message is used to instruct to perform protection switching on the sink node of the protection group according to the fault confirmation time.

Therefore, according to the control device in this embodiment of the present invention, an instruction message that includes a fault confirmation time is sent to a node, so that the node performs protection switching according to the fault confirmation time, invalid protection switching can be effectively avoided, and node protection switching efficiency can be improved.

Optionally, in an embodiment, in the control device 400 shown in FIG. 6, the third determining module is specifically configured to determine the fault confirmation time according to a delay difference between the first path and the second path.

Optionally, when a distance difference between the first path and the second path is less than 1000 km, the fault confirmation time is determined as 10 ms.

When a distance difference between the first path and the second path is greater than 1000 km but less than or equal to 3000 km, the fault confirmation time is determined as 20 ms.

When a distance difference between the first path and the second path is greater than 3000 km but less than or equal to 5000 km, the fault confirmation time is determined as 30 ms.

It should be understood that the second determining module may determine the fault confirmation time according to busy degrees of CPUs of the two paths, which is not limited in this embodiment of the present invention.

Optionally, in an embodiment, in the control device 400 shown in FIG. 6, the instruction message sent by the sending module is a path establishment message.

Optionally, in an embodiment, in the control device 400 shown in FIG. 6, the fault confirmation time determined by the second determining module is not more than 30 ms.

It should be understood that, in the prior art, protection switching time is generally within 50 ms, that is, the technical solutions in the embodiments of the present invention may not only resolve the invalid protection switching problem by using the fault confirmation time, but also avoid affecting protection switching performance of the protection group by generally preventing the protection switching time of the protection group from exceeding 50 ms.

It should also be understood that the instruction message that includes the fault confirmation time and that is sent by the sending module 430 to the sink node of the protection group determined by the second determining module may instruct to configure a protection switching mechanism ("configure a protection group" for short) for the sink node of the protection group and at the same time instruct to perform protection switching of the sink node of the protection group according to the fault confirmation time.

In the existing method for the protection switching, effectively avoiding invalid protection switching for a node is difficult. On the one hand, the invalid protection switching results in that a service is selectively received on a non-original selective receiving path. On the other hand, there is an increase in reporting of a switching event or a switching alarm caused by the protection switching, and the frequent invalid reporting of the switching events and the switching alarms affects network maintenance efficiency.

In conclusion, according to the control device in this embodiment of the present invention, an instruction message that includes a fault confirmation time is sent to a node, so that the node performs protection switching according to the fault confirmation time, invalid protection switching can be effectively avoided, node protection switching efficiency can be improved, and impact of the invalid protection switching on network maintenance can be reduced.

It should be understood that the technical solutions of the present invention may also be applied in a non-ASON network, and the invalid protection switching can be avoided by using a "fault confirmation time" mechanism. It should also be understood that the "fault confirmation time" mechanism may also be applied in another "dual feed and selective receiving" scenario, which is not particularly limited in this embodiment of the present invention.

It should also be understood that the control device 400 according to this embodiment of the present invention may correspond to the control device in the protection switching method in the embodiments of the present invention, and the foregoing and other operations and/or functions of all modules of the control device 400 are separately used to implement corresponding procedures of the methods shown in FIG. 1 to FIG. 4. For brevity, details are not described.

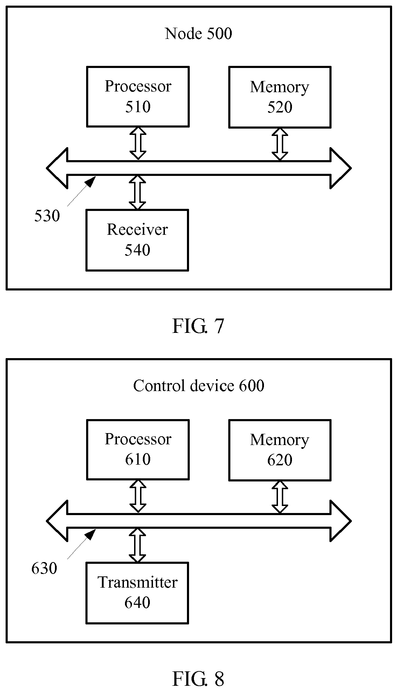

As shown in FIG. 7, an embodiment of the present invention further provides a node 500, and the node 500 includes a processor 510, a memory 520, a bus system 530, and a receiver 540. The processor 510, the memory 520, and the receiver 540 are connected by using the bus system 530, the memory 520 is configured to store an instruction, and the processor 510 is configured to execute the instruction stored in the memory 520, so as to control the receiver 540 to receive a signal. The receiver 540 is configured to receive an instruction message that includes a fault confirmation time, where the instruction message is used to instruct to perform protection switching on the node of the protection group according to the fault confirmation time. The processor 510 is configured to: when it is detected that a first path is faulty, or when it is detected that a fault on a second path disappears, start a timer whose duration is the fault confirmation time, where the first path is a path for the node to selectively receive a service, and the second path is not a path for the node to selectively receive a service. The processor 510 is further configured to: when it is determined that the timer expires, re-detect statuses of the first path and the second path. The processor 510 is further configured to determine whether to perform protection switching according to a re-detection result.

Therefore, according to the node in this embodiment of the present invention, when it is detected that a path on which the node currently works is faulty or that a path on which the node does not work recovers from a fault, a timer whose duration is a fault confirmation time is started, and when it is determined that the timer expires, whether to perform protection switching is determined according to current statuses of the two paths, which can effectively avoid invalid protection switching, and can further improve protection switching efficiency.

Optionally, in an embodiment, the processor 510 is specifically configured to start the timer for the first path when it is detected that the first path is faulty; or
the processor 510 is specifically configured to start the timer for the second path when it is detected that the fault on the second path disappears.

Optionally, in an embodiment, the processor 510 is specifically configured to start the timer when it is detected that the first path is faulty but the second path is not faulty; or
the processor 510 is specifically configured to start the timer when it is detected that the fault on the second path disappears but the first path is faulty.

Optionally, in an embodiment, the processor 510 is specifically configured to: when the re-detection result is that the first path is not faulty or that both the first path and the second path are faulty, determine not to perform protection switching.

Optionally, in an embodiment, the processor 510 is specifically configured to: when the re-detection result is that the first path is faulty but the second path is not faulty, determine to perform protection switching, so that the node disconnects from the first path and selectively receives a service on the second path.

Optionally, in an embodiment, the instruction message received by the receiver 540 is a path establishment message.

It should be understood that, in the embodiment of the present invention, the processor 510 may be a central processing unit (Central Processing Unit, "CPU" for short), or the processor 510 may be another general purpose processor, a digital signal processor (DSP), an application-specific integrated circuit (ASIC), a field programmable gate array (FPGA) or another programmable logic device, discrete gate or transistor logic device, discrete hardware component, or the like. The general purpose processor may be a microprocessor or the processor 510 may be any conventional processor or the like.

The memory 520 may include a read-only memory and a random access memory, and provide an instruction and data to the processor 510. A part of the memory 520 may further include a nonvolatile random access memory. For example, the memory 520 may further store information about a device type.

In addition to a data bus, the bus system 530 may further include a power bus, a control bus, a status signal bus, and the like. However, for clarity of description, various buses are marked as the bus system 530 in the figure.

In an implementation process, the steps in the foregoing methods may be completed by using an integrated logic circuit of hardware in the processor 510 or an instruction in a form of software. The steps of the methods disclosed with reference to the embodiments of the present invention may be directly executed and completed by a hardware processor, or may be executed and completed by using a combination of a hardware module and a software module in the processor. The software module may be located in a mature storage medium in the field, such as a random access memory, a flash memory, a read-only memory, a programmable read-only memory, an electrically-erasable programmable memory, or a register. The storage medium is located in the memory 520. The processor 510 reads information in the memory 520, and completes the steps of the foregoing methods in combination with hardware of the memory 520. To avoid repetition, details are not described herein.

It should be understood that the node 500 according to this embodiment of the present invention may correspond to the sink node of the protection group in the protection switching method 100 or the sink node of the protection group in the protection switching method 200 according to the embodiments of the present invention, or may correspond to the node B in FIG. 2 or the station C shown in FIG. 4, or may correspond to the node 300 according to the embodiments of the present invention.

The foregoing or other operations and/or functions of all modules in the node 500 are separately used to implement corresponding procedures of the methods shown in FIG. 1 to FIG. 4. For brevity, details are not described herein.

Therefore, according to the node in this embodiment of the present invention, when it is detected that a path on which the node currently works is faulty or that a fault on a path on which the node does not currently work disappears, a timer is started, and when the timer expires, whether to perform protection switching is determined by re-detecting statuses of the two paths, which can effectively avoid invalid protection switching, improve node protection switching efficiency, and reduce impact of the invalid protection switching on network maintenance.

As shown in FIG. 8, an embodiment of the present invention further provides a control device 600, and the control device 600 includes a processor 610, a memory 620, a bus system 630, and a transmitter 640. The processor 610, the memory 620, and the transmitter 640 are connected by using the bus system 630, the memory 620 is configured to store an instruction, and the processor 610 is configured to execute the instruction stored in the memory 620, so as to control the transmitter 640 to transmit a signal. The processor 610 is configured to determine that a service path passes through a first node and a second node that are interconnected, where the service path reuses a timeslot at an ingress of the first node and is split at an egress of the first node, and is split at an ingress of the second node and reuses a timeslot at an egress of the second node, and the service path between the first node and the second node includes a first path and a second path. The processor 610 is further configured to determine the second node as a sink node of a protection group. The processor 610 is further configured to determine a fault confirmation time of the sink node of the protection group. The transmitter 640 is configured to send an instruction message that includes the fault confirmation time to the sink node of the protection group, where the instruction message is used to instruct to perform protection switching on the sink node of the protection group according to the fault confirmation time.

Therefore, according to the control device in this embodiment of the present invention, an instruction message that includes a fault confirmation time is sent to a node, so that the node performs protection switching according to the fault confirmation time, invalid protection switching can be effectively avoided, and node protection switching efficiency can be improved.

Optionally, in an embodiment, the processor 610 is specifically configured to determine the fault confirmation time according to a delay difference between the first path and the second path.

Optionally, in an embodiment, the instruction message sent by the transmitter 640 is a path establishment message.

It should be understood that, in the embodiment of the present invention, the processor 610 may be a central processing unit (Central Processing Unit, "CPU" for short), or the processor 610 may be another general purpose processor, a digital signal processor (DSP), an application-specific integrated circuit (ASIC), a field programmable gate array (FPGA) or another programmable logic device, discrete gate or transistor logic device, discrete hardware component, or the like. The general purpose processor may be a microprocessor, or the processor may be any normal processor or the like.

The memory 620 may include a read-only memory and a random access memory, and provide an instruction and data to the processor 610. A part of the memory 620 may further include a nonvolatile random access memory. For example, the memory 620 may further store information about a device type.

In addition to a data bus, the bus system 630 may further include a power bus, a control bus, a status signal bus, and the like. However, for clarity of description, various buses are marked as the bus system 630 in the figure.

In an implementation process, the steps in the foregoing methods may be completed by using an integrated logic circuit of hardware in the processor 610 or an instruction in a form of software. The steps of the methods disclosed with reference to the embodiments of the present invention may be directly executed and completed by a hardware processor, or may be executed and completed by using a combination of a hardware module and a software module in the processor. The software module may be located in a mature storage medium in the field, such as a random access memory, a flash memory, a read-only memory, a programmable read-only memory, an electrically-erasable programmable memory, or a register. The storage medium is located in the memory 620. The processor 610 reads information in the memory 620, and completes the steps of the foregoing methods in combination with hardware of the memory 620. To avoid repetition, details are not described herein.

It should be understood that the control device 600 according to this embodiment of the present invention may correspond to the control device in the protection switching method according to the embodiments of the present invention, or may correspond to the control device 400 according to the embodiments of the present invention. The foregoing and other operations and/or functions of all modules of the control device 600 are separately used to implement corresponding procedures of the methods in FIG. 1 to FIG. 4. For brevity, details are not described herein.

Therefore, according to the control device in this embodiment of the present invention, an instruction message that includes a fault confirmation time is sent to a node, so that the node performs protection switching according to the fault confirmation time, invalid protection switching can be effectively avoided, node protection switching efficiency can be improved, and impact of the invalid protection switching on network maintenance can be reduced.

The term "and/or" in this specification describes only an association relationship for describing associated objects and represents that three relationships may exist. For example, A and/or B may represent the following three cases: Only A exists, both A and B exists, and only B exists. In addition, the character "/" in this specification generally instructs an "or" relationship between the associated objects.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention.

Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A protection switching method, comprising:
receiving (S110), by a sink node of a protection group, an instruction message that comprises a fault confirmation time, wherein the instruction message is used to instruct to perform protection switching on the sink node of the protection group according to the fault confirmation time;
when it is detected that a first path is faulty, or when it is detected that a fault on a second path disappears, starting (S120), by the sink node of the protection group, a timer whose duration is the fault confirmation time, wherein the first path is a path currently used by the sink node of the protection group to selectively receive a service, and the second path is not a path currently used by the sink node of the protection group to selectively receive a service, wherein after the timer whose duration is the fault confirmation time is started and before the timer expires, the sink node does not detect the statuses of the first path and the second path;
when the sink node of the protection group determines that the timer expires, re-detecting (S130) statuses of the first path and the second path; and
determining (S140), by the sink node of the protection group, whether to perform protection switching according to a re-detection result of the first path and the second path;

2. The method according to claim 1, wherein the starting, by the sink node of the protection group, a timer whose duration is the fault confirmation time comprises:
starting the timer when it is detected that the first path is faulty and the second path is not faulty; or
starting the timer when it is detected that the fault on the second path disappears and the first path is faulty.

3. The method according to claim 1 or 2, wherein the determining whether to perform protection switching comprises:
when the re-detection result is that the first path is not faulty or that both the first path and the second path are faulty, determining not to perform protection switching.

4. The method according to claim 1 or 2, wherein the determining whether to perform protection switching comprises:
when the re-detection result is that the first path is faulty and the second path is not faulty, determining to perform protection switching, so that the sink node of the protection group disconnects from the first path and selectively receives a service on the second path.

5. The method according to any of the preceding claims, wherein the fault confirmation time is determined according to a delay difference between the first path and the second path.

6. A protection switching method in a protection switching system, comprising a control device, a first node, and a second node, comprising:
determining (S210), by the control device, that a service path passes through a first node and a second node that are interconnected, wherein the service path reuses a timeslot at an ingress of the first node such that there is one service path at the ingress of the first node, and the service path is split at an egress of the first node such that there are at least two service paths at the egress of the first node, and the service path is split at an ingress of the second node such that there are at least two service paths at the ingress of the second node, and reuses a timeslot at an egress of the second node such that there is one service path at the egress of the second node, and the service path between the first node and the second node comprises a first path and a second path;
determining (S220), by the control device, the second node as a sink node of a protection group;
determining (S230), by the control device, a fault confirmation time of the sink node of the protection group; and
sending (S240), by the control device, an instruction message that comprises the fault confirmation time to the sink node of the protection group, wherein the instruction message is used to instruct to perform protection switching on the sink node of the protection group according to the fault confirmation time;
wherein each of the first node and the second node is configured to perform a protection switching method according to any of claims 1 to 5.

7. The method according to claim 6, wherein the determining a fault confirmation time of the sink node of the protection group comprises:
determining the fault confirmation time according to a delay difference between the first path and the second path.

8. A node, comprising:
a receiving module (310), configured to receive an instruction message that comprises a fault confirmation time, wherein the instruction message is used to instruct to perform protection switching on the node according to the fault confirmation time;
a timing module (320), configured to: when it is detected that a first path is faulty, or when it is detected that a fault on a second path disappears, start a timer whose duration is the fault confirmation time, wherein the first path is a path currently used by the node to selectively receive a service, and the second path is not a path currently used by the node to selectively receive a service, wherein after the timer whose duration is the fault confirmation time is started and before the timer expires, the node does not detect the statuses of the first path and the second path;
a detection module (330), configured to: when the timer of the timing module expires, re-detect statuses of the first path and the second path; and
a determining module (340), configured to determine whether to perform protection switching according to a re-detection result from the detection module;

9. The node according to claim 8, wherein the timing module is specifically configured to start the timer when it is detected that the first path is faulty and the second path is not faulty; or the timing module is specifically configured to start the timer when it is detected that the fault on the second path disappears and the first path is faulty.

10. The node according to claim 8 or 9, wherein the determining module is specifically configured to: when the re-detection result is that the first path is not faulty or that both the first path and the second path are faulty, determine not to perform protection switching.

11. The node according to claim 8 or 9, wherein the determining module is specifically configured to: when the re-detection result is that the first path is faulty and the second path is not faulty, determine to perform protection switching, so that the node disconnects from the first path and selectively receives a service on the second path.

12. A protection switching system, comprising a control device, a first node, and a second node, wherein the control device comprises:
a first determining module (410), configured to determine that a service path passes through the first node and the second node that are interconnected,
wherein the service path reuses a timeslot at an ingress of the first node such that there is one service path at the ingress of the first node, and the service path is split at an egress of the first node such that there are at least two service paths at the egress of the first node,
and the service path is split at an ingress of the second node such that there are at least two service paths at the ingress of the second node, and reuses a timeslot at an egress of the second node such that there is one service path at the egress of the second node, and the service path between the first node and the second node comprises a first path and a second path;
a second determining module (420), configured to determine that the second node is used as a sink node of a protection group;
a third determining module (430), configured to determine a fault confirmation time of the sink node of the protection group; and
a sending module (440), configured to send an instruction message that comprises the fault confirmation time to the sink node of the protection group, wherein the instruction message is used to instruct to perform protection switching on the sink node of the protection group according to the fault confirmation time,
wherein each of the first node and the second node is a node according to any of claims 8 to 11.

13. The control device according to claim 12, wherein the third determining module is specifically configured to determine the fault confirmation time according to a delay difference between the first path and the second path.

## Patentansprüche

1. Schutzumschaltungsverfahren, welches umfasst:
Empfangen (S110), durch einen Senkenknoten einer Schutzgruppe, einer Anweisungsnachricht, welche eine Fehlerbestätigungszeit umfasst, wobei die Anweisungsnachricht verwendet wird, um anzuweisen, eine Schutzumschaltung auf dem Senkenknoten der Schutzgruppe gemäß der Fehlerbestätigungszeit durchzuführen;
wenn erkannt wird, dass ein erster Pfad fehlerbehaftet ist, oder wenn erkannt wird, dass ein Fehler auf einem zweiten Pfad verschwindet, Starten (S120), durch den Senkenknoten der Schutzgruppe, eines Timers, dessen Dauer die Fehlerbestätigungszeit ist, wobei der erste Pfad ein Pfad ist, der gegenwärtig von dem Senkenknoten der Schutzgruppe verwendet wird, um selektiv einen Dienst zu empfangen, und der zweite Pfad kein Pfad ist, der gegenwärtig von dem Senkenknoten der Schutzgruppe verwendet wird, um selektiv einen Dienst zu empfangen, wobei, nachdem der Timer, dessen Dauer die Fehlerbestätigungszeit ist, gestartet wurde und bevor der Timer abläuft, der Senkenknoten die Zustände des ersten Pfades und des zweiten Pfades nicht erkennt;
wenn der Senkenknoten der Schutzgruppe bestimmt, dass der Timer abläuft, erneutes Erkennen (S130) der Zustände des ersten Pfades und des zweiten Pfades; und
Bestimmen (S140), durch den Senkenknoten der Schutzgruppe, ob eine Schutzumschaltung durchgeführt werden soll, gemäß einem Ergebnis der erneuten Erkennung des ersten Pfades und des zweiten Pfades.

2. Verfahren nach Anspruch 1, wobei das Starten, durch den Senkenknoten der Schutzgruppe, eines Timers, dessen Dauer die Fehlerbestätigungszeit ist, umfasst:
Starten des Timers, wenn erkannt wird, dass der erste Pfad fehlerbehaftet ist und der zweite Pfad nicht fehlerbehaftet ist; oder
Starten des Timers, wenn erkannt wird, dass der Fehler auf dem zweiten Pfad verschwindet und der erste Pfad fehlerbehaftet ist.

3. Verfahren nach Anspruch 1 oder 2, wobei das Bestimmen, ob eine Schutzumschaltung durchgeführt werden soll, umfasst:
wenn das Ergebnis der erneuten Erkennung ist, dass der erste Pfad nicht fehlerbehaftet ist oder dass sowohl der erste Pfad als auch der zweite Pfad fehlerbehaftet sind, Bestimmen, keine Schutzumschaltung durchzuführen.

4. Verfahren nach Anspruch 1 oder 2, wobei das Bestimmen, ob eine Schutzumschaltung durchgeführt werden soll, umfasst:
wenn das Ergebnis der erneuten Erkennung ist, dass der erste Pfad fehlerbehaftet ist und der zweite Pfad nicht fehlerbehaftet ist, Bestimmen, eine Schutzumschaltung durchzuführen, so dass sich der Senkenknoten der Schutzgruppe von dem ersten Pfad trennt und selektiv einen Dienst auf dem zweiten Pfad empfängt.

5. Verfahren nach einem der vorhergehenden Ansprüche, wobei die Fehlerbestätigungszeit gemäß einer Verzögerungsdifferenz zwischen dem ersten Pfad und dem zweiten Pfad bestimmt wird.

6. Schutzumschaltungsverfahren in einem Schutzumschaltungssystem, das eine Steuerungsvorrichtung, einen ersten Knoten und einen zweiten Knoten umfasst, umfassend:
Bestimmen (210), durch die Steuerungsvorrichtung, dass ein Dienstpfad durch einen ersten Knoten und einen zweiten Knoten, welche miteinander verbunden sind, verläuft, wobei der Dienstpfad einen Zeitschlitz an einem Eingang des ersten Knotens wiederverwendet, derart, dass ein Dienstpfad an dem Eingang des ersten Knotens vorhanden ist, und der Dienstpfad an einem Ausgang des ersten Knotens aufgeteilt ist, derart, dass wenigstens zwei Dienstpfade an dem Ausgang des ersten Knotens vorhanden sind, und der Dienstpfad an einem Eingang des zweiten Knotens aufgeteilt ist, derart, dass wenigstens zwei Dienstpfade an dem Eingang des zweiten Knotens vorhanden sind, und einen Zeitschlitz an einem Ausgang des zweiten Knotens wiederverwendet, derart, dass ein Dienstpfad an dem Ausgang des zweiten Knotens vorhanden ist, und der Dienstpfad zwischen dem ersten Knoten und dem zweiten Knoten einen ersten Pfad und einen zweiten Pfad umfasst;
Bestimmen (S220), durch die Steuerungsvorrichtung, des zweiten Knotens als einen Senkenknoten einer Schutzgruppe;
Bestimmen (S230), durch die Steuerungsvorrichtung, einer Fehlerbestätigungszeit des Senkenknotens der Schutzgruppe; und
Senden (S240), durch die Steuerungsvorrichtung, einer Anweisungsnachricht, welche die Fehlerbestätigungszeit umfasst, an den Senkenknoten der Schutzgruppe, wobei die Anweisungsnachricht verwendet wird, um anzuweisen, eine Schutzumschaltung auf dem Senkenknoten der Schutzgruppe gemäß der Fehlerbestätigungszeit durchzuführen;
wobei der erste Knoten und der zweite Knoten jeweils dafür ausgelegt sind, ein Schutzumschaltungsverfahren nach einem der Ansprüche 1 bis 5 durchzuführen.

7. Verfahren nach Anspruch 6, wobei das Bestimmen einer Fehlerbestätigungszeit des Senkenknotens der Schutzgruppe umfasst:
Bestimmen der Fehlerbestätigungszeit gemäß einer Verzögerungsdifferenz zwischen dem ersten Pfad und dem zweiten Pfad.

8. Knoten, welcher umfasst:
ein Empfangsmodul (310), das dafür ausgelegt ist, eine Anweisungsnachricht zu empfangen, welche eine Fehlerbestätigungszeit umfasst, wobei die Anweisungsnachricht verwendet wird, um anzuweisen, eine Schutzumschaltung auf dem Knoten gemäß der Fehlerbestätigungszeit durchzuführen;
ein Zeitsteuerungsmodul (320), das dafür ausgelegt ist: wenn erkannt wird, dass ein erster Pfad fehlerbehaftet ist, oder wenn erkannt wird, dass ein Fehler auf einem zweiten Pfad verschwindet, einen Timer zu starten, dessen Dauer die Fehlerbestätigungszeit ist, wobei der erste Pfad ein Pfad ist, der gegenwärtig von dem Knoten verwendet wird, um selektiv einen Dienst zu empfangen, und der zweite Pfad kein Pfad ist, der gegenwärtig von dem Knoten verwendet wird, um selektiv einen Dienst zu empfangen, wobei, nachdem der Timer, dessen Dauer die Fehlerbestätigungszeit ist, gestartet wurde und bevor der Timer abläuft, der Knoten nicht die Zustände des ersten Pfades und des zweiten Pfades erkennt;
ein Erkennungsmodul (330), das dafür ausgelegt ist: wenn der Timer des Zeitsteuerungsmoduls abläuft, Zustände des ersten Pfades und des zweiten Pfades erneut zu erkennen; und
ein Bestimmungsmodul (340), das dafür ausgelegt ist, gemäß einem Ergebnis der erneuten Erkennung von dem Erkennungsmodul zu bestimmen, ob eine Schutzumschaltung durchgeführt werden soll.

9. Knoten nach Anspruch 8, wobei das Zeitsteuerungsmodul speziell dafür ausgelegt ist, den Timer zu starten, wenn erkannt wird, dass der erste Pfad fehlerbehaftet ist und der zweite Pfad nicht fehlerbehaftet ist; oder das Zeitsteuerungsmodul speziell dafür ausgelegt ist, den Timer zu starten, wenn erkannt wird, dass der Fehler auf dem zweiten Pfad verschwindet und der erste Pfad fehlerbehaftet ist.

10. Knoten nach Anspruch 8 oder 9, wobei das Bestimmungsmodul speziell dafür ausgelegt ist: wenn das Ergebnis der erneuten Erkennung ist, dass der erste Pfad nicht fehlerbehaftet ist oder dass sowohl der erste Pfad als auch der zweite Pfad fehlerbehaftet sind, zu bestimmen, keine Schutzumschaltung durchzuführen.

11. Knoten nach Anspruch 8 oder 9, wobei das Bestimmungsmodul speziell dafür ausgelegt ist: wenn das Ergebnis der erneuten Erkennung ist, dass der erste Pfad fehlerbehaftet ist und der zweite Pfad nicht fehlerbehaftet ist, zu bestimmen, eine Schutzumschaltung durchzuführen, so dass sich der Knoten von dem ersten Pfad trennt und selektiv einen Dienst auf dem zweiten Pfad empfängt.

12. Schutzumschaltungssystem, welches eine Steuerungsvorrichtung, einen ersten Knoten und einen zweiten Knoten umfasst, wobei die Steuerungsvorrichtung umfasst:
ein erstes Bestimmungsmodul (410), das dafür ausgelegt ist zu bestimmen, dass ein Dienstpfad durch einen ersten Knoten und einen zweiten Knoten, welche miteinander verbunden sind, verläuft,
wobei der Dienstpfad einen Zeitschlitz an einem Eingang des ersten Knotens wiederverwendet, derart, dass ein Dienstpfad an dem Eingang des ersten Knotens vorhanden ist, und der Dienstpfad an einem Ausgang des ersten Knotens aufgeteilt ist, derart, dass wenigstens zwei Dienstpfade an dem Ausgang des ersten Knotens vorhanden sind,
und der Dienstpfad an einem Eingang des zweiten Knotens aufgeteilt ist, derart, dass wenigstens zwei Dienstpfade an dem Eingang des zweiten Knotens vorhanden sind, und einen Zeitschlitz an einem Ausgang des zweiten Knotens wiederverwendet, derart, dass ein Dienstpfad an dem Ausgang des zweiten Knotens vorhanden ist, und der Dienstpfad zwischen dem ersten Knoten und dem zweiten Knoten einen ersten Pfad und einen zweiten Pfad umfasst;
ein zweites Bestimmungsmodul (420), das dafür ausgelegt ist zu bestimmen, dass der zweite Knoten als ein Senkenknoten einer Schutzgruppe verwendet wird;
ein drittes Bestimmungsmodul (430), das dafür ausgelegt ist, eine Fehlerbestätigungszeit des Senkenknotens der Schutzgruppe zu bestimmen; und
ein Sendemodul (440), das dafür ausgelegt ist, eine Anweisungsnachricht, welche die Fehlerbestätigungszeit umfasst, an den Senkenknoten der Schutzgruppe zu senden, wobei die Anweisungsnachricht verwendet wird, um anzuweisen, eine Schutzumschaltung auf dem Senkenknoten der Schutzgruppe gemäß der Fehlerbestätigungszeit durchzuführen;
wobei der erste Knoten und der zweite Knoten jeweils ein Knoten nach einem der Ansprüche 8 bis 11 sind.

13. Steuerungsvorrichtung nach Anspruch 12, wobei das dritte Bestimmungsmodul speziell dafür ausgelegt ist, die Fehlerbestätigungszeit gemäß einer Verzögerungsdifferenz zwischen dem ersten Pfad und dem zweiten Pfad zu bestimmen.

## Revendications

1. Procédé de commutation de protection, comprenant :
la réception (S110), par un noeud collecteur d'un groupe de protection, d'un message d'instruction qui comprend un temps de confirmation de défaut, dans lequel le message d'instruction est utilisé pour ordonner d'effectuer une commutation de protection sur le noeud collecteur du groupe de protection conformément au temps de confirmation de défaut ;
lorsqu'il est détecté qu'un premier trajet est défectueux, ou lorsqu'il est détecté qu'un défaut sur un deuxième trajet disparaît, le déclenchement (S120), par le noeud collecteur du groupe de protection, d'une temporisation dont la durée est le temps de confirmation de défaut, dans lequel le premier trajet est un trajet utilisé actuellement par le noeud collecteur du groupe de protection pour recevoir sélectivement un service, et le deuxième trajet n'est pas un trajet utilisé actuellement par le noeud collecteur du groupe de protection pour recevoir sélectivement un service, dans lequel, après que la temporisation dont la durée est le temps de confirmation de défaut a été lancée et avant que la temporisation ait expiré, le noeud collecteur ne détecte pas les états du premier trajet et du deuxième trajet ;
lorsque le noeud collecteur du groupe de protection détermine que la temporisation a expiré, la redétection (S130) d'états du premier trajet et du deuxième trajet ; et
la détermination (S140), par le noeud collecteur du groupe de protection, du fait de savoir s'il est nécessaire d'effectuer la commutation de protection conformément à un résultat de redétection du premier trajet et du deuxième trajet.

2. Procédé selon la revendication 1, dans lequel le déclenchement, par le noeud collecteur du groupe de protection, d'une temporisation dont la durée est le temps de confirmation de défaut comprend :
le déclenchement de la temporisation lorsqu'il est détecté que le premier trajet est défectueux et que le deuxième trajet n'est pas défectueux ; ou
le déclenchement de la temporisation lorsqu'il est détecté que le défaut sur le deuxième trajet disparaît et que le premier trajet est défectueux.

3. Procédé selon la revendication 1 ou 2, dans lequel la détermination du fait de savoir s'il est nécessaire d'effectuer la commutation de protection comprend :
lorsque le résultat de redétection est que le premier trajet n'est pas défectueux ou que le premier trajet et le deuxième trajet sont tous deux défectueux, la détermination de ne pas effectuer une commutation de protection.

4. Procédé selon la revendication 1 ou 2, dans lequel la détermination du fait de savoir s'il est nécessaire d'effectuer la commutation de protection comprend :
lorsque le résultat de redétection est que le premier trajet est défectueux et que le deuxième trajet n'est pas défectueux, la détermination d'effectuer une commutation de protection, de manière à ce que le noeud collecteur du groupe de protection se déconnecte du premier trajet et reçoive sélectivement un service sur le deuxième trajet.

5. Procédé selon l'une quelconque des revendications précédentes, dans lequel le temps de confirmation de défaut est déterminé conformément à une différence de retard entre le premier trajet et le deuxième trajet.

6. Procédé de commutation de protection dans un système de commutation de protection, comprenant un dispositif de commande, un premier noeud, et un deuxième noeud, comprenant :
la détermination (S210), par le dispositif de commande, du fait qu'un trajet de service passe par un premier noeud et un deuxième noeud qui sont interconnectés, dans lequel le trajet de service réutilise un créneau temporel à une entrée du premier noeud de sorte qu'il existe un trajet de service à l'entrée du premier noeud, et le trajet de service est divisé à une sortie du premier noeud de sorte qu'il existe au moins deux trajets de service à la sortie du premier noeud, et le trajet de service est divisé à une entrée du deuxième noeud de sorte qu'il existe au moins deux trajets de service à l'entrée du deuxième noeud, et réutilise un créneau temporel à une sortie du deuxième noeud de sorte qu'il existe un trajet de service à la sortie du deuxième noeud, et le trajet de service entre le premier noeud et le deuxième noeud comprend un premier trajet et un deuxième trajet ;
la détermination (S220), par le dispositif de commande, du deuxième noeud en tant que noeud collecteur d'un groupe de protection ;
la détermination (S230), par le dispositif de commande, d'un temps de confirmation de défaut du noeud collecteur du groupe de protection ; et
l'envoi (S240), par le dispositif de commande, d'un message d'instruction qui comprend le temps de confirmation de défaut au noeudcollecteur du groupe de protection, dans lequel le message d'instruction est utilisé pour ordonner d'effectuer une commutation de protection sur le noeudcollecteur du groupe de protection conformément au temps de confirmation de défaut ;
dans lequel chacun du premier noeudet du deuxième noeud est configuré pour mettre en oeuvre un procédé de commutation de protection selon l'une quelconque des revendications 1 à 5.

7. Procédé selon la revendication 6, dans lequel la détermination d'un temps de confirmation de défaut du noeud collecteur du groupe de protection comprend :
la détermination du temps de confirmation de défaut conformément à une différence de retard entre le premier trajet et le deuxième trajet.

8. Noeud, comprenant :
un module de réception (310), configuré pour recevoir un message d'instruction qui comprend un temps de confirmation de défaut, dans lequel le message d'instruction est utilisé pour ordonner d'effectuer une commutation de protection sur le noeud conformément au temps de confirmation de défaut ;
un module de temporisation (320), configuré pour : lorsqu'il est détecté qu'un premier trajet est défectueux, ou lorsqu'il est détecté qu'un défaut sur un deuxième trajet disparaît, lancer une temporisation dont la durée est le temps de confirmation de défaut, dans lequel le premier trajet est un trajet utilisé actuellement par le noeud pour recevoir sélectivement un service, et le deuxième trajet n'est pas un trajet utilisé actuellement par le noeud pour recevoir sélectivement un service, dans lequel, après que la temporisation dont la durée est le temps de confirmation de défaut a été lancée et avant que la temporisation ait expiré, le noeud ne détecte pas les états du premier trajet et du deuxième trajet ;
un module de détection (330), configuré pour : lorsque la temporisation du module de temporisation a expiré, redétecter des états du premier trajet et du deuxième trajet ; et
un module de détermination (340), configuré pour déterminer s'il est nécessaire d'effectuer la commutation de protection conformément à un résultat de redétection provenant du module de détection.

9. Noeud selon la revendication 8, dans lequel le module de temporisation est configuré spécifiquement pour lancer la temporisation lorsqu'il est détecté que le premier trajet est défectueux et que le deuxième trajet n'est pas défectueux ; ou
le module de temporisation est configuré spécifiquement pour lancer la temporisation lorsqu'il est détecté que le défaut sur le deuxième trajet disparaît et que le premier trajet est défectueux.

10. Noeud selon la revendication 8 ou 9, dans lequel le module de détermination est configuré spécifiquement pour : lorsque le résultat de redétection est que le premier trajet n'est pas défectueux ou que le premier trajet et le deuxième trajet sont tous deux défectueux, déterminer de ne pas effectuer une commutation de protection.

11. Noeud selon la revendication 8 ou 9, dans lequel le module de détermination est configuré spécifiquement pour : lorsque le résultat de redétection est que le premier trajet est défectueux et que le deuxième trajet n'est pas défectueux, déterminer d'effectuer une commutation de protection, de manière à ce que le noeud se déconnecte du premier trajet et reçoive sélectivement un service sur le deuxième trajet.

12. Système de commutation de protection, comprenant un dispositif de commande, un premier noeud et un deuxième noeud, dans lequel le dispositif de commande comprend :
un premier module de détermination (410), configuré pour déterminer qu'un trajet de service passe par le premier noeud et le deuxième noeud qui sont interconnectés,
dans lequel le trajet de service réutilise un créneau temporel à une entrée du premier noeud de sorte qu'il existe un trajet de service à l'entrée du premier noeud, et le trajet de service est divisé à une sortie du premier noeud de sorte qu'il existe au moins deux trajets de service à la sortie du premier noeud,
et le trajet de service est divisé à une entrée du deuxième noeud de sorte qu'il existe au moins deux trajets de service à l'entrée du deuxième noeud, et réutilise un créneau temporel à une sortie du deuxième noeud de sorte qu'il existe un trajet de service à la sortie du deuxième noeud, et le trajet de service entre le premier noeud et le deuxième noeud comprend un premier trajet et un deuxième trajet ;
un deuxième module de détermination (420), configuré pour déterminer que le deuxième noeud est utilisé en tant que noeud collecteur d'un groupe de protection ;
un troisième module de détermination (430), configuré pour déterminer un temps de confirmation de défaut du noeud collecteur du groupe de protection ; et
un module d'envoi (440), configuré pour envoyer un message d'instruction qui comprend le temps de confirmation de défaut au noeud collecteur du groupe de protection, dans lequel le message d'instruction est utilisé pour ordonner d'effectuer une commutation de protection sur le noeud collecteur du groupe de protection conformément au temps de confirmation de défaut,
dans lequel chacun du premier noeud et du deuxième noeud est un noeud selon l'une quelconque des revendications 8 à 11.

13. Dispositif de commande selon la revendication 12, dans lequel le troisième module de détermination est configuré spécifiquement pour déterminer le temps de confirmation de défaut conformément à une différence de retard entre le premier trajet et le deuxième trajet.
